Europäisches Patentamt

European Patent Office

Office européen des brevets

(19)

(11) EP 0 853 197 A1

(12) EUROPEAN PATENT APPLICATION

(43) Date of publication:
15.07.1998 Bulletin 1998/29

(51) Int Cl.6: **F03D 11/00**, F16F 7/10, F16F 15/03, F03D 1/06

(21) Application number: 98200090.3

(22) Date of filing: 14.01.1998

(84) Designated Contracting States:
**AT BE CH DE DK ES FI FR GB GR IE IT LI LU MC NL PT SE**
Designated Extension States:
**AL LT LV MK RO SI**

(30) Priority: **14.01.1997 NL 1005000**

(71) Applicant: **Aerpac UK Ltd.**
**Glenrothes, Fife KY6 2RU (GB)**

(72) Inventors:
• **Yemm, Richard**
  **Bruntsfield, Edinburgh EH10 4JL (GB)**
• **Heerkes, Hendrik Jan**
  **7555 MN Hengelo (Ov) (NL)**

(74) Representative:
**Schumann, Bernard Herman Johan**
**Arnold & Siedsma,**
**Advocaten en Octrooigemachtigden,**
**Sweelinckplein 1**
**2517 GK Den Haag (NL)**

(54) **Damped wind turbine blade**

(57) A rotor with at least one aerodynamically modelled blade, for instance a helicopter rotor or a wind turbine rotor comprises:

a shaft which is mounted rotatably relative to a frame and which bears on a free end zone a hub to which the or each said blade is fixed, wherein in the free end zone of the or each blade remote from the hub is arranged at least one mechanical resonator, an Eigen frequency of which is substantially the same as the frequency of a resonance of the blade to be suppressed, in which resonance the blade vibrates in the plane determined during operation by its path;
wherein the resonator comprises a mass which is movable reciprocally round a middle position at least in said plane;

The rotor is characterized in that the mass is movably guided in a curved path, the middle zone of which has the greatest distance from the rotation axis of the rotor, such that during rotation of the rotor the centrifugal force acting on the mass at least partially provides the force which drives the mass back to the rest position defined by the middle zone.

FIG.1

## Description

The invention relates to a rotor with at least one aerodynamically modelled blade, for instance a helicopter rotor or a wind turbine rotor, which rotor comprises:

a shaft which is mounted rotatably relative to a frame and which bears on a free end zone a hub to which the or each said blade is fixed, wherein in the free end zone of the or each blade remote from the hub is arranged at least one mechanical resonator, an Eigen frequency of which is substantially the same as the frequency of a resonance of the blade to be suppressed, in which resonance the blade vibrates in the plane determined during operation by its path;
wherein the resonator comprises a mass which is movable reciprocally round a middle position at least in said plane.

A rotor of the described type can find application as for instance as helicopter rotor, in which case the motor drives the shaft and the blades cause a wind flow which causes an upward thrust. The rotor can also serve as a wind turbine rotor, in which case the wind produces the driving force via the blades for causing the shaft to rotate with force which in turn drives for instance an electric generator for generating energy.

The rotor comprises for instance two or more blades which are grouped such that the rotor comprising the shaft, the hub and the blades has a rotation axis which coincides with the axis of rotation of the shaft. Use can also be made of a structure wherein only one blade is used. To avoid imbalance use is then made of a counterweight.

It has been found that the blades of rotors can be excited in an Eigen frequency as the wind speed increases. This phenomenon occurs because in these conditions the aerodynamic damping decreases and can even reach negative values.

Safety means are known which are able to detect the occurrence of such resonances and which can set braking means into operation whereby, when resonances with a dangerous amplitude occur, the rotor of a wind turbine is slowed down or even stopped completely.

It is an object of the invention to offer provisions, using which a rotor can continue to operate without emergency intervention under the said conditions without any danger of dangerous resonances occurring.

With a view hereto the rotor according to the invention has the feature that the mass is movably guided in a curved path, the middle zone of which has the greatest distance from the rotation axis of the rotor, such that during rotation of the rotor the centrifugal force acting on the mass at least partially provides the force which drives the mass back to the rest position defined by the middle zone.

The Eigen frequency and the possible damping factor of the damper must be adapted to the design of the rotor in question and can vary considerably.

A specific embodiment has the special feature that the mass forms part of a pendulum, of which the rotation axis and the mass centre define an arm which in said middle position extends in lengthwise direction of the blade.

A preferred embodiment is characterized by a second pendulum which is coupled positively to the first pendulum and the arm of which extends in said middle position in lengthwise direction of the blade, the second pendulum being inverted with respect to the first pendulum, in an inherently unstable configuration.

This latter embodiment in particular makes use as it were of a positive and a negative pendulum, resulting in a relatively great effective length of the pendulum. With a total mounting length in the longitudinal direction of a blade in the order of 250 mm a pendulum with an effective length of 800 mm can for instance be simulated.

In order to prevent imbalance and a behaviour of the two pendulums which is difficult to predict, said embodiment can have the special feature that in the middle position the arms of the pendulums substantially extend mutually in line such that the mass centres of the pendulums are movable substantially in one common plane.

A practical embodiment of the variant with the two pendulums acting in opposing directions has the special feature that two masses are supported by respective support arms and are rotatable round respective rotation axes, and that the arms are positively coupled by transmission means for rotation in opposing directions. The transmission means can for instance comprise a toothed belt or the like. An embodiment is however recommended in which the coupling means comprise a set of co-acting toothed wheels.

Very simple from a design viewpoint, but not essential, is the embodiment in which the transmission ratio amounts to 1.

Both pendulum arms can also be substantially the same, but different lengths may also be employed.

A mechanically elegant embodiment of the described preferred embodiment has the special feature that the support arm of each pendulum has a form such that it can make a considerable rotation in both directions relative to the middle position while clearing the rotation bearing of the other pendulum. The use of two oppositely directed pendulums has the great advantage over the use of a single pendulum that the Eigen frequency of the pendulum system, given a determined geometry of the resonator, is wholly determined by the ratio of the effective masses of the two pendulums. This means that by adapting the ratio of these masses the resonance properties of the resonator can essentially be influenced, this in principle between frequency 0 and a frequency which is achievable with a single pendulum. With a single pendulum the resonance frequency is not dependent on the effective mass and the resonance frequency can be varied only by varying the effective length of the pendulum. Since this length must remain within certain limits, it is not possible to go below a determined frequency. A great drawback here is then that the physical dimensions of the resonator can become very large. The double pendulum does not have this drawback. The only intervention in the pendulum system is that the masses of the pendulums have to be adapted to the chosen resonance frequency. With the double pendulum, varying the masses effectively changes the stiffness of the resonator without change of inertia.

Expressed as formulae, the described difference is tantamount to the following. For the single pendulum applies:

$$\omega = \Omega \sqrt{\frac{R}{l}}$$

Herein:

$\omega =$ Eigen angular frequency of the pendulum
$\Omega =$ angular frequency of the rotor
$R =$ distance of the mass from the rotation axis of the rotor
$l =$ length of the pendulum

For the double resonator with two pendulums coupled for operation in opposing directions the frequency $\omega$ can now be adjusted by varying the ration of the two masses $m_1$ en $m_2$, without change to the geometric parameters R and l. For instance, in the case of pendulums of equal length l and unity gear ratio:

$$\omega = \Omega \sqrt{\frac{R}{l} \cdot \frac{m_1 - m_2}{m_1 + m_2}}$$

Herein $m_1$ is the mass of the "positive" pendulum, wherein the mass is located furthest to the outside. $m_2$ is the mass of the "negative" pendulum, wherein the mass is located closest to the inside.

Another variant which with simple means can realize a large mass moment of inertia and therewith a great pendulum length has the special feature that the mass is rotatable and during movement is driven for positive rotation through a fixed path.

The damper can in principle be of any suitable type which is able to exert a speed-dependent counterforce on the resonator. A damper can be based on viscosity, friction or any other suitable mechanism. According to the invention an embodiment is recommended in which the damper is an eddy-current damper comprising electrical conducting means and magnet means, of which the one is coupled to the movable mass and the other is deployed fixedly relative to the blade. It should be understood that the electrical conducting means and the magnet means must co-act such that the desired damping factor is obtained.

A practical embodiment is characterized by second transmission means which transmit the rotation of the resonator to a rotatably mounted, electrically conducting disc of for instance aluminium, along the main plane of which are disposed magnet means, for instance at least one permanent magnet.

This embodiment preferably takes a form such that the second transmission means have a transmission ratio of more than 1, for instance 10-50.

As already stated, the optimal damping factor depends on the total design of the rotor. In a typical embodiment the damping factor of the damper has a value in the range of about 0,1 - 1,0.

In order not to interfere with the aerodynamic design of a blade, the rotor according to the invention can preferably be embodied such that the resonator is accommodated in the blade.

A specific embodiment has the special feature that the hub supports at least three blades and that at least two adjacent blades are each provided with a resonator. It has been found, strangely enough, that the occurrence of said resonances usually forms a picture in which two adjacent blades are in anti-resonance. It should be understood that the imbalance possibly occurring in the rotor, which results because not all blades are provided with a resonator, can be compensated for instance by a counter-mass or a dummy mass in another blade. On the other hand it must also be understood that a resonator constructed for instance wholly of metal, for instance aluminium, steel of the like, results in an extra mass which is negligible relative to the total weight of a blade. If necessary, a blade can also be brought into balance by one or more counterweights.

In a specific embodiment the rotor has the special feature that the damper is of externally controllable electromagnetic type.

This variant in particular can be embodied such that the damper comprises a device which can operate both as electric motor and as generator. Active intervention in the behaviour of the damper is hereby possible on the one hand and it can hereby be achieved on the other hand that the energy generated by the damper can be used to power for instance an electronic control system, whereby the rotor can be substantially independent of external energy supply. A central energy store can for instance comprise one or more batteries and solar cells can for instance be used to maintain the battery voltage for power supply to the electronic components of the rotor.

The described controllable embodiments of the damper can form part of a system with negative-feedback whereby a high degree of flexibility is combined with high reliability.

A specific embodiment is characterized by a programmable control unit for controlling the damper. The system can for instance be adaptive or self-teaching. The control unit can be based on fuzzy logic.

The invention will now be elucidated with reference to the annexed drawings. Herein:

figure 1 shows a front view of a wind turbine;
figure 2 shows a schematic front view of a resonator;
figure 3 shows a schematic front view of another embodiment of a resonator comprising two pendulums acting in opposing directions;
figure 4 is a side view of the resonator of figure 3;
figures 5a, 5b and 5c show respectively a first extreme position, a middle position and a second extreme position of the resonator of figure 3;
figure 6 is a graphic representation of the Eigen frequency of a test model of the resonator of figure 3 plotted against the mass ratio of the two pendulums;
figure 7 shows an oscilloscope image recorded during determining of an Eigen frequency at a centrifugal acceleration of 19g;
figures 8 and 9 show oscilloscope images of the respective displacements of the resonator of a test model at respectively maximum and minimum damping.

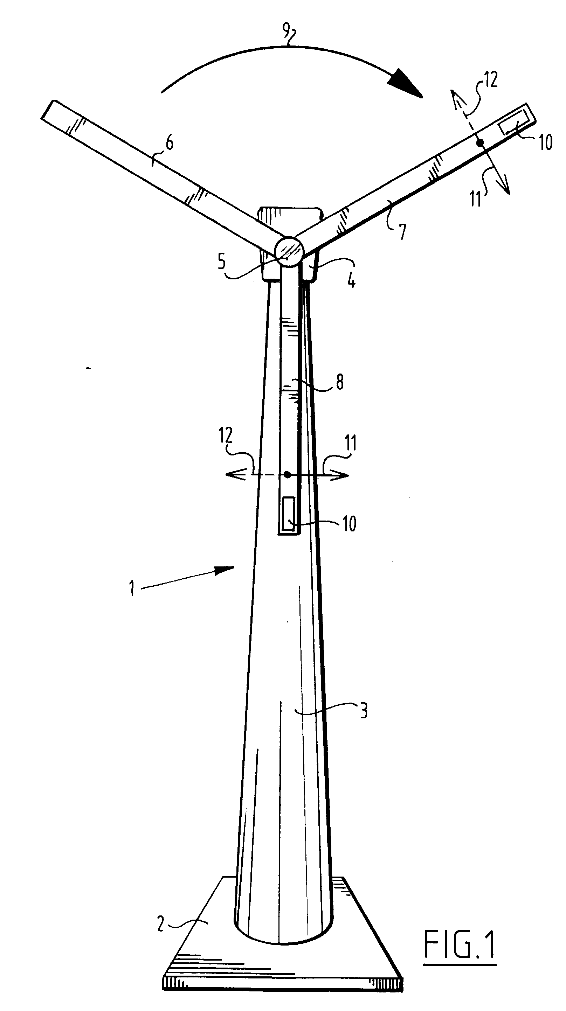

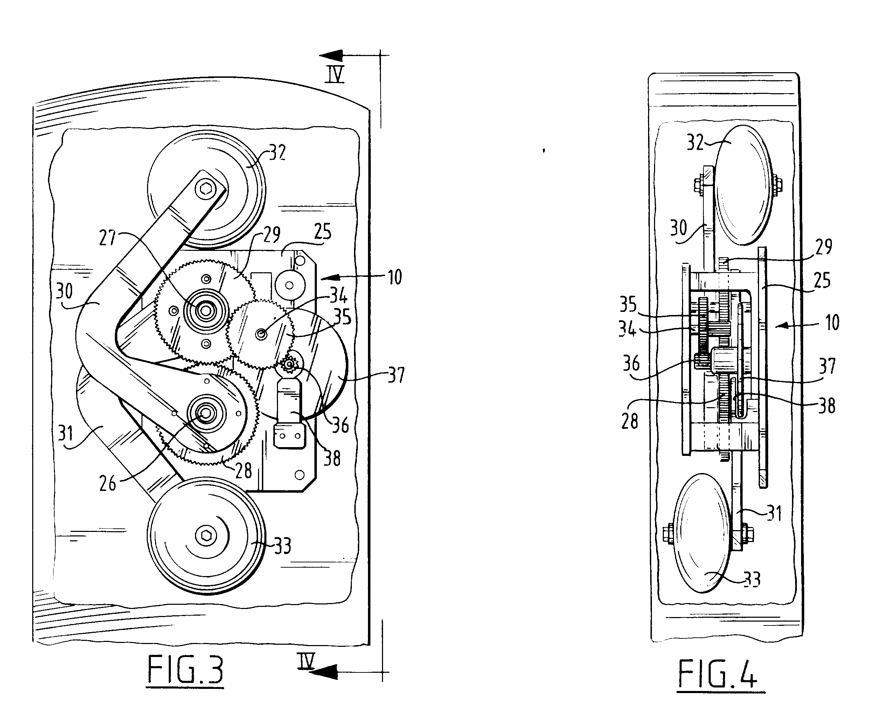

Figure 1 shows a wind turbine 1 comprising a foot 2, a support column 3, a frame 4 which also forms the housing of a generator, a shaft (not shown) mounted on the frame, a hub 5 arranged on the shaft and three blades 6, 7, 8 fixed to this hub at mutually equal angular distances. An arrow 9 indicates the rotation direction which is determined by the aerodynamic form and direction of blades 6, 7, 8. Blades 7 and 8 are provided on their ends with identical resonators, both designated with reference numeral 10. The resonators are of the type as according to figures 3, 4 and 5.

Respective full and broken line arrows 11, 12 indicate symbolically the manner in which for instance the blades 7 and 8 can be in anti-resonance. Resonators 10 serve to effectively prevent this anti-resonance.

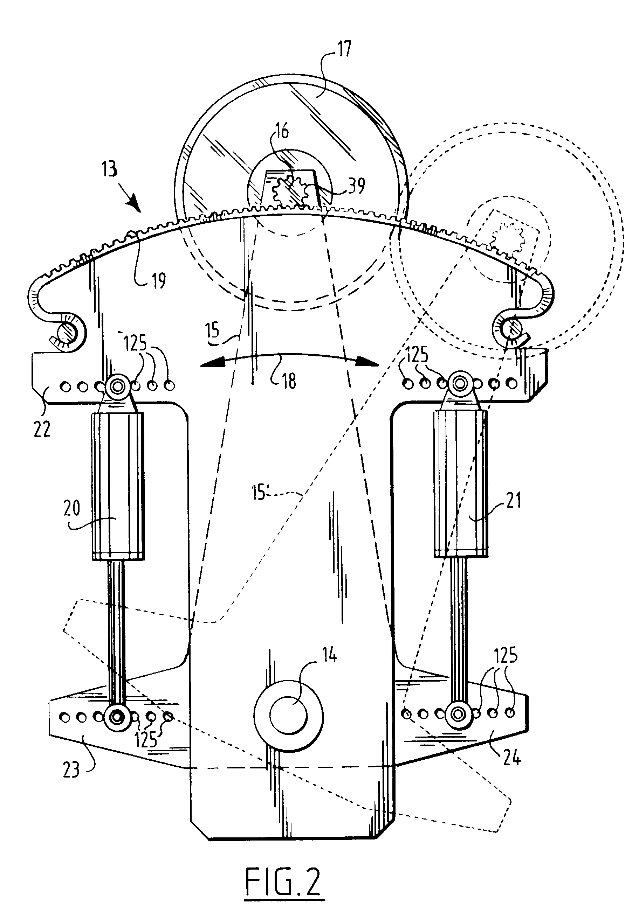

Figure 2 shows a resonator 13 comprising a rotation bearing 14 which is fixedly disposed relative to a rotor blade and round which a pendulum 15 is rotatable. Via a rotation bearing 16 the pendulum supports on its end a rotatable disc 17 which, during execution of a pivoting movement as according to arrow 18, is driven rotatably by a toothed wheel 39 which co-acts with a curved rack 19. The pendulum 15' is drawn with broken lines in the situation where it has undergone a rotation. Hydraulic dampers 20, 21 damp the pivoting movements of pendulum 15. They are arranged between a fixed frame 22, which is fixedly connected to a blade, and two side arms 23, 24 of pendulum 15. By means of different holes, all designated 125 for the sake of convenience, the positions of dampers 20, 21, and therewith the damping factor, can be adjusted.

Because the mass 17 is rotatable, pendulum 15 has a considerably greater inertia than can be explained solely on the basis of the mass moment of inertia of pendulum 15, 17. A greater length than the physical pendulum length is hereby simulated.

Figure 3 shows a preferred embodiment wherein a resonator connected for instance to blade 7 comprises a frame 25 which by means of respective rotation bearings 26, 27 supports respective toothed wheels 28, 29 and respective support arms 30, 31. These support arms support the respective masses 32, 33. These masses are embodied for instance as heavy metal blocks, the effective value of which can be modified by fastening screws therein via threaded holes or by removing them.

Toothed wheels 28 and 29 are identical, as are arms 30 and 31 (although these conditions are not essential). The rotations of the masses 32 and 33 are hereby identical. Owing to the fact that the masses are not the same and moreover have slightly differing distances from the rotation centre of hub 5, the masses effectively counteract each other to suppress the described resonances.

Via a transmission comprising a toothed wheel (not shown) driven by toothed wheel 29, a toothed wheel 35 arranged with the former on one shaft 34 and a relatively small toothed wheel 36, an aluminium disc 37 directly coupled to this latter is driven rotatably while being positively coupled to the rotation or pivoting of masses 32 and 33. Because a permanent magnet 38 is placed along the main plane of disc 37, considerable eddy currents are generated in disc 37 during the relatively rapid rotation of disc 37 during operation of the resonator, which currents have a strong braking effect on the speed of movement aimed at by the resonator. This effectively has the effect of introducing a damping. The strength of the magnet and its distance from the disc determines the damping factor.

Figure 4 shows the resonator 10 in side view.

Figure 5b shows schematically the middle position of resonator 10 according to figure 3.

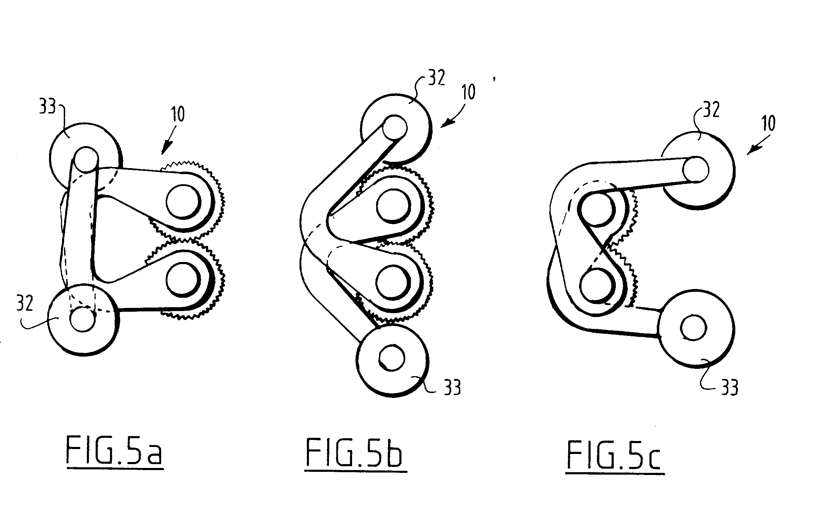

Figure 5a shows the one extreme rotation position, while figure 5c shows the other extreme rotation position. This latter position is reached due to the form of the support arms 30, 31 shown particularly clearly in figure 3. Due to the curved form the drawn intertwined structure of the pendulums can be realized whereby a wholly symmetrical structure without imbalance is obtained.

As described, the resonator of figures 3, 4 and 5 comprises as it were a positively acting pendulum with positive stiffness and a second pendulum coupled positively thereto with action in opposing direction which can be described as a pendulum with negative stiffness. By altering the ratio of masses 32 and 33 the Eigen frequency of the resonator can be adjusted precisely over a wide band without altering the geometry of the system or the total moving mass and while retaining the small mounting length. In the shown embodiment the pendulums can have rotation angles of up to +/-40°. The eddy-current damper is easy to adjust and requires no maintenance whatever.

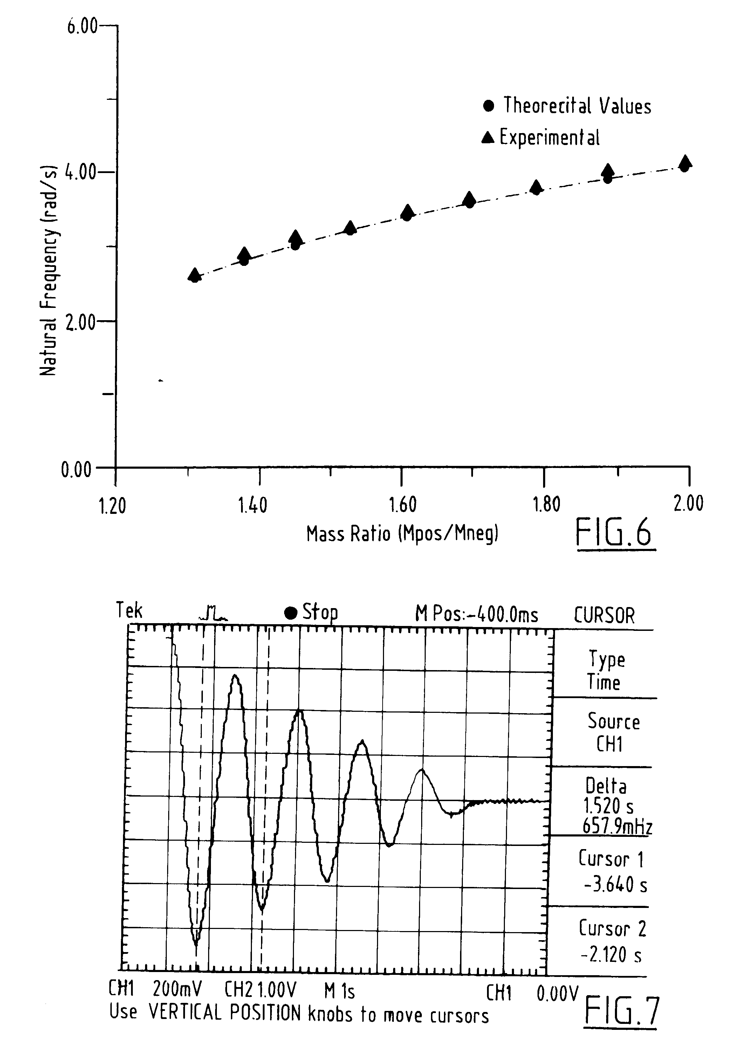

The non-damped natural frequency of the free vibration of the resonator was measured over the whole adjustment range at an acceleration of 1g. Figure 6 shows the measurement results compared to theoretical predictions. It is apparent that the correlation between theory and practice is a very good one.

Figure 7 shows a typical oscilloscope image obtained during tests of the oscillation frequency. It is noted that in the case of "stall-regulated" turbines great accelerations can occur in the end zones of the blades and thereby in the resonators. These accelerations can lie in the order of 15-25g.

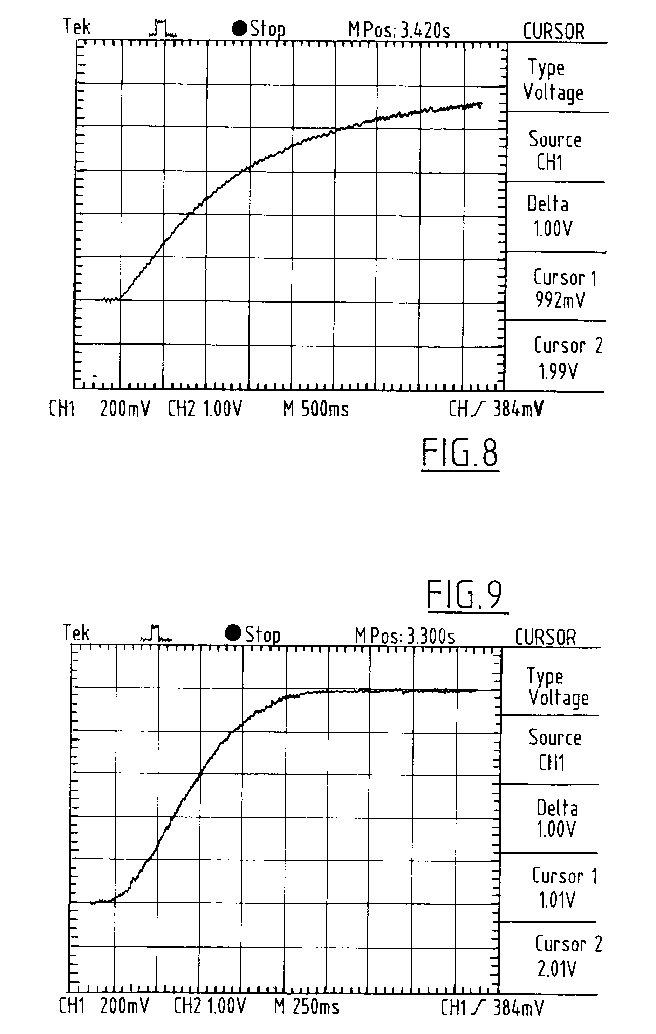

Figures 8 and 9 show oscilloscope images of the damping behaviour at differing extreme damping factors. All tests were carried out at an acceleration level of 1g. Figure 8 shows a heavily over-damped behaviour, corresponding in this case with a damping factor of more than 3 at 1g. This corresponds with a damping factor of slightly more than 0.8 in practical conditions of 17g.

The situation according to figure 9 corresponds with a damping factor of about 1.5 at 1g, corresponding with about 0.35 at 17g.

It must be appreciated that the shown data is only indicative.

**Claims**

1. Rotor with at least one aerodynamically modelled blade, for instance a helicopter rotor or a wind turbine rotor, which rotor comprises:

   a shaft which is mounted rotatably relative to a frame and which bears on a free end zone a hub to which the or each said blade is fixed, wherein in the free end zone of the or each blade remote from the hub is arranged at least one mechanical resonator, an Eigen frequency of which is substantially the same as the frequency of a resonance of the blade to be suppressed, in which resonance the blade vibrates in the plane determined during operation by its path; and
   wherein the resonator comprises a mass which is movable reciprocally round a middle position at least in said plane;

   **characterized in that**
   the mass is movably guided in a curved path, the middle zone of which has the greatest distance from the rotation axis of the rotor, such that during rotation of the rotor the centrifugal force acting on the mass at least partially provides the force which drives the mass back to the rest position defined by the middle zone.

2. Rotor as claimed in claim 1,
   **characterized in that**

the mass forms part of a pendulum, of which the rotation axis and the mass centre define an arm which in said middle position extends in lengthwise direction of the blade.

3. Rotor as claimed in claim 1,
   **characterized by**
   a second pendulum which is coupled positively to the first pendulum and the arm of which extends in said middle position in lengthwise direction of the blade, the second pendulum being inverted with respect to the first pendulum, in an inherently instable configuration.

4. Rotor as claimed in claim 3,
   **characterized in that**
   in the middle position the arms of the pendulums substantially extend mutually in line such that the mass centres of the pendulums are movable substantially in one common plane.

5. Rotor as claimed in claim 3,
   **characterized in that**
   two masses are supported by respective support arms and are rotatable round respective rotation axes, and that the arms are positively coupled by transmission means for rotation in opposing directions.

6. Rotor as claimed in claim 5,
   **characterized in that**
   the coupling means comprise a set of co-acting toothed wheels.

7. Rotor as claimed in claim 5,
   **characterized in that**
   the transmission ratio amounts to 1.

8. Rotor as claimed in claim 5,
   **characterized in that**
   both pendulum arms are substantially the same.

9. Rotor as claimed in claim 5,
   **characterized in that**
   the support arm of each pendulum has a form such that it can make a considerable rotation in both directions relative to the middle position while clearing the rotation bearing of the other pendulum.

10. Rotor as claimed in claim 1,
    **characterized in that**
    the mass is rotatable and during movement is driven for positive rotation through a fixed path.

11. Rotor as claimed in claim 1,
    **characterized in that**
    the damper is an eddy-current damper comprising electrical conducting means and magnet means, of which the one is coupled to the movable mass and the other is deployed fixedly relative to the blade.

12. Rotor as claimed in claim 11,
    **characterized by**
    second transmission means which transmit the rotation of the resonator to a rotatably mounted, electrically conducting disc of for instance aluminium, along the main plane of which are disposed magnet means, for instance at least one permanent magnet.

13. Rotor as claimed in claim 12,
    **characterized in that**
    the second transmission means have a transmission ratio of more than 1, for instance 10-50.

14. Rotor as claimed in claim 1,
    **characterized by**
    a damper, wherein the damping factor of the damper has a value in the range of about 0,1 - 1,0.

15. Rotor as claimed in claim 1,
    **characterized in that**
    the resonator is accommodated in the blade.

16. Rotor as claimed in claim 1,
    **characterized in that**
    the hub supports at least three blades and that at least two adjacent blades are each provided with a resonator.

17. Rotor as claimed in claim 1,
    **characterized in that**
    the damper is of externally controllable electromagnetic type.

18. Rotor as claimed in claim 17,
    **characterized in that**
    the damper comprises a device which can operate both as electric motor and as generator.

19. Rotor as claimed in claim 18,
    **characterized by**
    a programmable control unit for controlling the damper.

FIG.1

FIG.2

FIG.4

FIG.3

FIG.5a          FIG.5b          FIG.5c

EP 0 853 197 A1

FIG.6

FIG.7

FIG.8

FIG.9

| | European Patent Office | EUROPEAN SEARCH REPORT | Application Number EP 98 20 0090 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
| --- | --- | --- | --- |
| Y | WO 95 21327 A (LM GLASFIBER AS ;BONUS ENERGY AS (DK); STIESDAL HENRIK (DK)) 10 August 1995 | 1 | F03D11/00 F16F7/10 F16F15/03 F03D1/06 |
| Y | * abstract * | 2-5,7-9, 11-19 | |
| Y | | 6 | |
| | * page 1, line 15 - line 31 * * page 2, line 24 - page 4, line 14 * * page 4, line 26 - page 5, line 7 * * page 6, line 5 - line 19 * * page 10, line 8 - line 15 * * figures 1,6 * --- | | |
| Y | DE 18 17 443 A (THE BOEING CO.) 18 September 1969 * page 6, paragraph 4 - page 7, paragraph 2 * * page 9, paragraph 2 - paragraph 4 * * figures * | 1 | |
| Y | | 2-5,7-9, 11-19 | |
| Y | | 6 | TECHNICAL FIELDS SEARCHED (Int.Cl.6) |
| Y | --- GB 171 824 A (H.A.DANFORTH) 22 December 1921 * page 2, line 16 - line 32; figures * --- | 6 | F03D F16F B64C F01D |
| A | US 4 518 313 A (JENSEN RONALD N ET AL) 21 May 1985 * abstract; figures * --- | 1 | |
| A | EP 0 014 521 A (ANCHOR DARLING IND) 20 August 1980 * abstract; figure 12 * --- | 2-19 | |
| A | US 4 572 471 A (SCHREPFER RUDOLF) 25 February 1986 * column 1, line 9 - line 27; figures * --- -/-- | 2-19 | |

The present search report has been drawn up for all claims

| Place of search | Date of completion of the search | Examiner |
| --- | --- | --- |
| THE HAGUE | 16 April 1998 | Criado Jimenez, F |

EPO FORM 1503 03.82 (P04C01)

**European Patent Office**

**EUROPEAN SEARCH REPORT**

Application Number

EP 98 20 0090

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 4 365 770 A (MARD KENNETH C ET AL) 28 December 1982 <br> * column 16, line 30 - line 58; figure 16 * <br> --- | 2-19 | |
| A | US 3 887 296 A (MILLS NOEL ET AL) <br> * column 2, line 18 - line 21; figure 2 * <br> --- | 1 | |
| A | US 4 527 951 A (TRIER FERDINAND) <br> ----- | | |

**TECHNICAL FIELDS SEARCHED (Int.Cl.6)**

The present search report has been drawn up for all claims

| Place of search | Date of completion of the search | Examiner |
|---|---|---|
| THE HAGUE | 16 April 1998 | Criado Jimenez, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)